# FASCICULE DE BREVET EUROPEEN

(11) **EP 1 405 790 B1**
(45) Date de publication et mention de la délivrance du brevet: **24.05.2006**
(21) Numéro de dépôt: 03292357.5
(22) Date de dépôt: 26.09.2003
(51) Int. Cl.: B64G 1/50

(54) **Architecture modulaire pour le contrôle thermique d'un véhicule spatial**
Modulare Bauweise für die Wärmeregelung eines Raumfahrzeuges
Modular architecture for the thermal control of a spacecraft

(30) Priorité: 03.10.2002 FR 0212240
(43) Date de publication de la demande: 07.04.2004
(73) Titulaire: ALCATEL, 75008 Paris (FR)
(72) Inventeur: Gayrard, Jean-Didier, 31100 Toulouse (FR); Belis, Eric, 31100 Toulouse (FR); Michard, Frédéric, 31470 Saint Lys (FR)
(74) Mandataire: Hedarchet, Stéphane

(56) Documents cités:
- EP-A- 0 995 677
- US-A- 5 271 582
- JIMENEZ A P ET AL: "Space Station Freedom photovoltaic power module design status" PROCEEDINGS OF THE 24TH INTERSOCIETY ENERGY CONVERSION ENGINEERING CONFERENCE, 6 août 1989 (1989-08-06), pages 277-281, XP010089687
- WON SOON CHANG ET AL: "Advanced Two-phase Thermal Management In Spacecraft" PROCEEDINGS OF THE INTERSOCIETY ENERGY CONVERSION ENGINEERING CONFERENCE, vol. 2, 12 août 1990 (1990-08-12), pages 121-129, XP010301290
- SCHWEICKART R ET AL: "Testing of a controller for a hybrid capillary pumped loop thermal control system" PROCEEDINGS OF THE INTERSOCIETY ENERGY CONVERSION ENGINEERING SOCIETY, 6 août 1989 (1989-08-06), pages 69-74, XP010089652

## Description

La présente invention est relative au domaine des véhicules spatiaux et concerne plus particulièrement le contrôle thermique des équipements à modules électroniques d'un satellite.

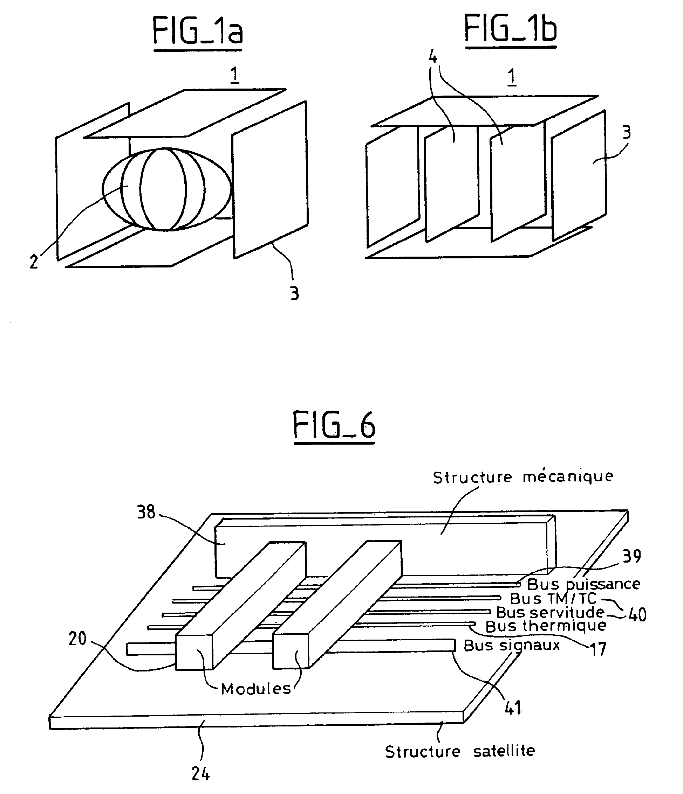

Les satellites de la génération actuelle ont été conçus de telle façon que les équipements électroniques de la charge utile et les équipements avioniques de la plate-forme soient conditionnés dans des boites métalliques qui sont montées mécaniquement à plat sur les panneaux structurels (murs et cloisons) du satellite. Comme illustré sur la figure 1a, le satellite est assimilable à un cube 1, le centre 2 étant occupé par les réservoirs de carburant, les murs 3 (à savoir les panneaux structurels) formant les six faces du satellite et des cloisons, non représentées, reliant les murs aux réservoirs.

Les équipements électroniques et avioniques sont reliés entre eux par un harnais de câblage complexe qui véhicule l'alimentation électrique, les signaux de servitudes, les signaux utiles radiofréquences ou micro-ondes dans le cas d'un satellite de télécommunication... Les harnais sont pénalisants sur le plan de leur masse, du temps passé pour la conception et le test et sur le plan de leur coût.

Cette conception qui découle de l'encombrement important des réservoirs n'est plus pertinente pour des nouveaux satellites faisant usage de la propulsion électrique pour lequel le volume de carburant nécessaire à la mise sur l'orbite, au maintien à poste et au contrôle d'attitude est plus réduit. La taille des réservoirs se trouvant alors réduite, un important volume intérieur est disponible pour y placer des panneaux intérieurs 4 en vue de l'aménagement d'équipements supplémentaires de la charge utile et de l'avionique.

Le réaménagement du volume libéré doit être mis à profit pour évoluer vers une architecture modulaire des systèmes thermiques, électriques et mécaniques du satellite, une standardisation de l'implantation de la charge utile et une réduction des coûts. Plus particulièrement, l'aménagement des équipements électroniques, la conception de leur contrôle thermique et des harnais de liaison qui étaient basés sur une approche jusqu'alors plutôt planaire passeront par une approche tridimensionnelle.

Les équipes de recherche et développement de la Demanderesse se sont particulièrement souciées du problème du contrôle thermique des équipements dans un tel contexte.

En effet, lors du fonctionnement en orbite d'un satellite, les équipements qui y sont embarqués dissipent une forte quantité de chaleur. Pour éviter la surchauffe du satellite, Il est nécessaire de prévoir un dispositif de transfert de chaleur capable d'évacuer cette dernière depuis l'intérieur du satellite vers l'espace.

Un certain nombre de systèmes sont connus actuellement pour effectuer ce transfert de chaleur.

Ces systèmes comprennent un ou plusieurs radiateurs fixes ou déployables reliés au satellite et munis d'un dispositif de transfert de chaleur. Le principe de ce dispositif de transfert de chaleur est toujours fondé sur l'utilisation d'un fluide circulant entre la zone chaude c'est-à-dire la zone où la puissance thermique est dissipée, et la zone froide, c'est-à-dire la zone où cette puissance thermique absorbée par le fluide est transférée vers le milieu extérieur.

Un premier type de dispositifs connu est le caloduc. Ce système comprend un tube métallique (en aluminium par exemple) dans lequel circule un fluide caloporteur (en général l'ammoniac), et utilise les propriétés des écoulements diphasiques liquide-vapeur ainsi que les propriétés de capillarité des liquides. Ainsi, un caloduc est un système diphasique fermé dans lequel la vapeur créée au niveau de la zone chaude (dite zone d'évaporation) est aspirée vers la zone froide (où la pression est moins élevée) et s'y condense sur la paroi métallique du tube. La phase liquide du fluide utilisé glisse le long de la paroi métallique du tube en sens inverse de l'écoulement de la phase vapeur du fluide, qui reste confinée au centre du tube. Ce retour du fluide le long de la paroi est assuré par une structure capillaire (mèche ou rainures longitudinales) reliant les deux extrémités du tube et qui joue à la fois le rôle de pompe capillaire et de séparateur des deux phases liquide-vapeur.

Les dispositifs de transfert de chaleur utilisant les caloducs, quoique largement utilisés dans le domaine des satellites, posent néanmoins un certain nombre de problèmes.

En premier lieu, leurs performances en termes de capacité de transport de chaleur est limitée à quelques centaines de W.m. Ainsi, pour les satellites de télécommunications de forte puissance, ces dispositifs sont insuffisants et peu adaptés aux distances et chemins thermiques entre les sources chaude et froide.

En outre, pour les essais thermiques à effectuer au sol, il faut veiller à ce que les caloducs soient horizontaux ou avec les zones d'évaporation au-dessous des zones de condensation, sinon le liquide doit remonter par capillarité en s'opposant aux forces de gravitation.

Ainsi, on préfère utiliser des dispositifs à boucle fluide monophasique ou diphasique active où une pompe assure l'écoulement du fluide.

Dans les dispositifs à boucle fluide monophasique, le fluide caloporteur (fréons, eau, ammoniac, etc...) absorbe la puissance dissipée par les équipements, augmentant ainsi sa température, et rejette cette puissance en se refroidissant dans un ou plusieurs radiateurs. La circulation du fluide est assurée par une pompe mécanique.

Bien que permettant d'absorber des puissances nettement plus élevées que ce qui est possible à l'aide des caloducs, on peut préférer à ce type de dispositifs à boucle fluide monophasique celui des boucles fluides diphasiques, notamment pour les satellites de forte puissance.

Les dispositifs de transfert de chaleur à boucles fluides diphasiques à pompage capillaire (CPL pour "Capillary Pumped Loop" en anglais, ou LHP) utilisent, comme les caloducs, la chaleur latente de vaporisation du fluide pour absorber et rejeter la chaleur. Le fluide caloporteur change ainsi d'état lors de sa circulation dans la boucle. Il se vaporise en absorbant la chaleur dissipée par les équipements au niveau de l'évaporateur, et se condense en rejetant cette chaleur dans un ou plusieurs condenseurs situés au niveau du radiateur. Le fluide est mis en circulation par une pompe capillaire localisée au niveau de l'évaporateur. Les phases vapeur et liquide sont séparées, hormis au niveau du condenseur où elles circulent dans le même sens, contrairement au caloduc dans lequel les deux phases circulent en sens inverse dans le même tube.

En termes de capacité de transfert de chaleur, ce type de dispositifs est nettement plus efficace que les caloducs pour une structure capillaire beaucoup plus limitée (seul l'évaporateur présente cette structure de pompage).

Dans le cas des boucles monophasique, le pompage est simplement mécanique tandis que pour les boucles diphasiques, le pompage capillaire peut assurer tout ou partie du transfert calorifique de l'évaporateur vers le condenseur. Ainsi, en fonction des performances visées, les boucles fluides seront monophasiques à pompage mécanique, diphasiques à pompage capillaire ou diphasiques à pompage mécanique.

Enfin pour les niveaux de puissance les plus importants, les boucles diphasiques à pompage mécanique apparaissent les plus adaptées. Elles cumulent les avantages des boucles diphasiques et monophasiques sans leurs inconvénients respectifs. Il demeure toutefois que la durée de vie des pompes et la complexité de mise en oeuvre limite encore leur utilisation.

Compte tenu de ce qui précède, l'objectif de la présente invention est donc de mettre au point :
- une architecture de systèmes de servitudes électriques, mécaniques et thermiques qui permettent la mise en oeuvre d'interfaces modulaires et standards avec les équipements électroniques de la charge utile et de la plate-forme d'un véhicule spatial et
- une interface modulaire et standardisée (banalisée) pour les servitudes électriques, mécaniques et thermiques des équipements électroniques de la charge utile et de la plate-forme de ce véhicule spatial.

L'effort porte plus particulièrement sur le contrôle thermique des équipements électroniques du véhicule spatial (servitude thermique), tel qu'un satellite, compte tenu des dispositifs de transfert de chaleur couramment utilisés et exposés ci-dessus, qui permette une modularité de ces équipements et une standardisation des panneaux de soutien.

A cet effet, l'invention a pour objet un équipement selon la revendication 1.

Selon un mode de réalisation, le dispositif de transfert de chaleur étant du type à boucle fluide monophasique, lesdits moyens de transfert comprennent une conduite conformée pour présenter une surface commune optimale avec le module, cette conduite présentant deux extrémités sur lesquels s'articulent lesdits moyens de raccords pour la connexion audit dispositif de transfert de chaleur de la structure.

Selon un mode de réalisation, lesdites extrémités se trouvent au niveau du plan inférieur de contact de l'équipement avec la structure, et en ce que le dispositif de transfert de chaleur de la structure comporte des dérivations dont les extrémités présentent des ouvertures au niveau du plan supérieur de contact de la structure avec l'équipement de manière à faire coïncider les ouvertures correspondantes lors de la fixation de l'équipement sur la structure.

Selon un mode de réalisation, ladite conduite se poursuit sur une longueur prédéterminée au delà desdites ouvertures à l'extérieur de l'équipement formant ainsi des segments extérieurs.

Selon un mode de réalisation, la coopération entre l'équipement et la structure (24) se réalise par encastrement des segments au sein des dérivations respectives.

Selon un mode de réalisation, le dispositif de raccord comporte un dispositif de verrouillage/déverrouillage qui bloque/autorise la circulation du fluide dans la conduite.

Selon un mode de réalisation, le dispositif de transfert de chaleur étant du type à boucle fluide diphasique, l'équipement comporte :
- un ensemble évaporateur comprenant au moins un tube pour l'alimentation en fluide caloporteur à l'état liquide de l'ensemble, au moins une enveloppe externe du tube évaporateur agencée présentant une surface optimale avec le module de façon à récolter la vapeur générée au niveau de la surface extérieure du tube lorsque le module dissipe de la chaleur, et un collecteur de vapeur,
- des moyens de raccord du tube et du collecteur aptes à raccorder ces derniers respectivement à une conduite d'alimentation en fluide caloporteur provenant d'un réservoir et à une ligne de transport de vapeur pour véhiculer cette dernière vers le condenseur du dispositif de chaleur.

Selon un mode de réalisation, le module comporte des moyens de connexion à des moyens de transport de signaux situés dans la structure et destinés à véhiculer :
- une alimentation électrique fournissant les diverses tensions à l'équipement,
- et/ou les signaux de servitudes tels que ceux pour l'acquisition des télémesures des équipements et le contrôle de ces derniers, les références temporelles et fréquentielles,
- et/ou les signaux utiles tels que les signaux micro-ondes, optiques et numériques.

Selon un mode de réalisation, lesdits moyens de transport de signaux étant à technologie optique, les moyens de connexion comporte des moyens de conversion micro-onde/optique.

L'invention a également pour objet une structure de satellite, caractérisée en ce qu'elle supporte un équipement selon l'invention.

Selon un mode de réalisation, la structure selon l'invention est pourvue des moyens de connexion mécaniques, thermiques et électriques adaptés pour la connexion de plusieurs radiateurs.

L'invention a également pour objet un agencement d'équipements pour une structure de satellite selon l'invention, caractérisé en ce qu'à chaque radiateur est associé un groupe d'équipements correspondant à une température d'échauffement propre et donc nécessitant un refroidissement adapté.

L'invention a également pour objet un système de communication pour un satellite, caractérisé en ce qu'il comprend au moins un équipement selon l'invention, et une structure de support de cet équipement selon l'invention.

Selon un mode de réalisation, ledit système comporte :
- un brasseur de signaux utiles,
- un sous-système de servitudes,
- un sous-système d'alimentation de puissance, ces derniers étant respectivement reliés auxdits moyens de transport de signaux.

Selon un mode de réalisation, le brasseur comporte des moyens de programmation statiques ou dynamiques du module.

Selon un mode de réalisation, pour véhiculer les signaux optiques et les signaux micro-ondes de fort niveau convertis ou destinés à être convertis dans le domaine optique, lesdits moyens de connexion de l'équipement comporte des moyens de conversion micro-onde/optique, lesdits moyens de transport comportent au moins une fibre optique et le brasseur est à technologie optique.

D'autres caractéristiques et avantages de la présente invention apparaîtront à la lecture de la description suivante d'un mode de réalisation de l'invention, donné à titre illustratif et nullement limitatif.

Dans les figures suivantes :
- la figure la modélise le satellite à réservoir alors que la figure 1b modélise le satellite à propulsion électrique,
- la figure 2 illustre le principe de la boucle fluide diphasique à pompage capillaire,
- la figure 3 représente un satellite avec des radiateurs déployables,
- la figure 4 représente schématiquement un mode de réalisation d'un équipement selon l'invention adapté pour coopérer avec un dispositif de transfert de chaleur à boucle fluide monophasique,
- la figure 4a représente une variante de l'équipement de la figure 4,
- la figure 5 représente un mode de réalisation de l'équipement selon l'invention adapté pour coopérer avec un dispositif de transfert de chaleur à boucle fluide diphasique,
- sur la figure 5a est représenté l'équipement de la figure 5 découplé de sa structure de support,
- la figure 6 représente le principe de modularité de l'agencement d'équipements par rapport à différents bus de la structure du satellite selon un mode de réalisation de l'invention,
- la figure 7 représente un système de communication d'équipements avec les différents sous-systèmes du satellite et le systéme de brassage des signaux de communication des équipements électroniques selon un mode de réalisation de l'invention,
- la figure 8 illustre la fonction d'un brasseur de signaux selon un mode de réalisation,
- les figures 9a et 9b illustrent respectivement deux types de technologies utilisables pour le brasseur selon l'invention,
- la figure 10a illustre l'utilisation d'une fibre optique unique pour la liaison entre les différents équipements et la figure 10b représente le spectre obtenu par l'exploitation des techniques optiques connues de multiplexage en longueurs d'onde.

Dans toutes ces figures, les éléments remplissant des fonctions identiques portent les mêmes numéros de référence.

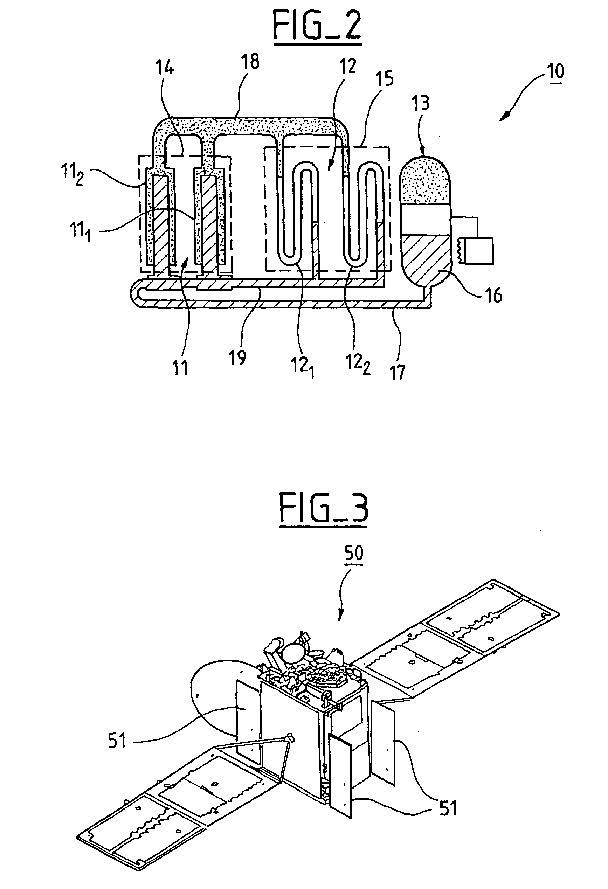

Sur la figure 2 est illustré le principe de la boucle fluide diphasique à pompage capillaire.

On voit en figure 2 une boucle fluide à pompage capillaire 10 de type CPL (pour "Capillary Pumped Loop" en anglais) comprenant un évaporateur 11, un condenseur 12 et un réservoir pressuriseur 13. En trait mixte et de manière schématique sont représentés également la source de chaleur 14, c'est-à-dire les équipements (non représentés) dissipateurs de chaleur embarqués à bord d'un satellite, au voisinage de laquelle se trouve l'évaporateur 11, et la zone d'évacuation de la chaleur 15 située au niveau d'un panneau de radiateur déployable (non représenté) du satellite, et au voisinage de laquelle se trouve le condenseur 12.

Le réservoir 13 de fluide caloporteur 16, par exemple de l'ammoniac, alimente la boucle 10 en fluide au moyen d'une conduite 17. Le fluide 16, à l'état liquide symbolisé par des hachures sur la figure 2, pénètre dans l'évaporateur 11 où il est vaporisé. La vapeur ainsi générée (symbolisée par des points sur la figure 2) s'écoule vers le condenseur 12 par une ligne de transport 18.

La vapeur est alors condensée en liquide au sein du condenseur 12 et revient vers l'évaporateur via une ligne de transport 19.

L'évaporateur 11 a une structure interne capillaire (non représentée). Il est formé de deux tubes évaporateurs 11₁, 11₂ montés en parallèle et comportant sur leur surface interne des rainures longitudinales et circonférentielles s'étendant d'un bout à l'autre de leur longueur. Ainsi, le liquide arrivant dans l'évaporateur 11 est aspiré radialement à travers la mèche capillaire et se réchauffe en progressant vers l'extérieur de l'évaporateur, où se trouve la puissance à dissiper, avec un débit très faible. Il se vaporise alors sur la surface de l'évaporateur, où se forment des ménisques initiateurs de force capillaire. L'augmentation de pression capillaire dans la mèche est proportionnelle à la tension superficielle du fluide 16 et inversement proportionnelle au rayon équivalent des ménisques.

A sa sortie de la mèche capillaire de l'évaporateur 11, la vapeur est donc collectée dans l'enveloppe externe de l'évaporateur 11, en interface directe avec la source de chaleur 14. Du fait de la pression capillaire de pompage dans la boucle 10, cette vapeur est ensuite dirigée dans la ligne de vapeur et s'écoule jusqu'au condenseur 12, lui-même formé de deux circuits condenseurs 12₁ et 12₂ montés en parallèle.

Le réservoir pressuriseur 13 sert notamment à réguler la température de fonctionnement de la boucle 10 ainsi que de pompe d'amorçage de la boucle 10.

Les lignes de transport 18 et 19 sont de simples tubes induisant de faibles pertes de pression et sont très légères ; elles peuvent être pliées très facilement de par leur flexibilité intrinsèque. Elles sont généralement en alliage d'aluminium ou en acier et ont un diamètre intérieur compris entre 4 et 10 mm.

Quant au radiateur de refroidissement, celui-ci est classiquement déporté aujourd'hui sur des panneaux. il est ainsi représenté, en figure 3, des radiateurs déployables 51 dans un satellite 50 (trois seulement sont visibles en figure 3). Ces radiateurs déployables sont mono-panneaux pour simplifier l'illustration, mais ils peuvent être remplacés par des radiateurs multi-panneaux. Ces panneaux sont initialement (avant le lancement du satellite sur son orbite) repliés les uns sur les autres. Après le lancement du satellite et sa mise en orbite, ces panneaux sont déployés de manière à constituer une grande surface d'évacuation de la chaleur, nécessaire notamment pour les satellites actuels de forte puissance.

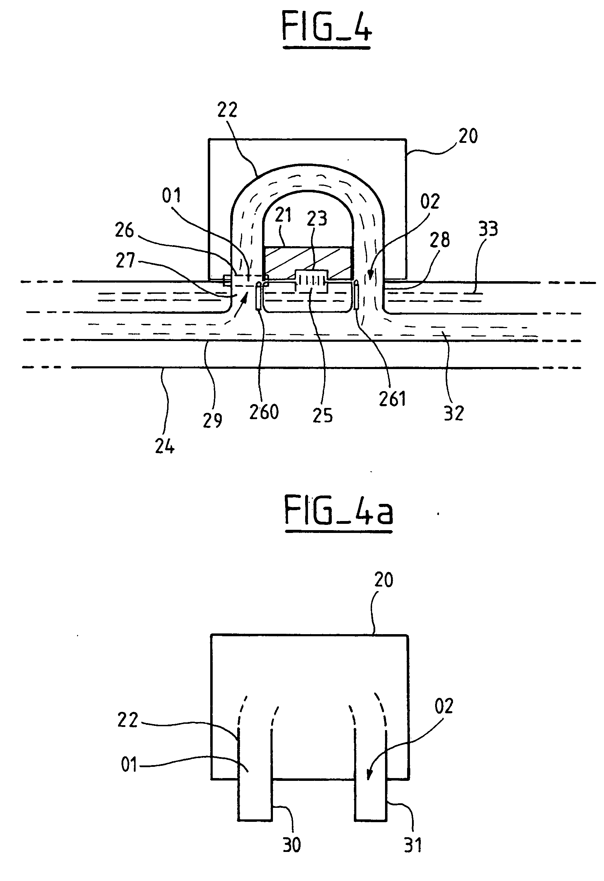

La figure 4 représente schématiquement un mode de réalisation d'un équipement 20 selon l'invention adapté pour coopérer avec un dispositif de transfert de chaleur à boucle fluide monophasique. L'équipement 20 est en fait un équipement blindé comportant un module électronique 21, ce dernier pouvant se présenter sous la forme d'un simple bloc, d'une carte enfichable, voire même d'un composant. Les modules du satellite sont dissipateurs d'une quantité de chaleur, quantité indexée sur le rendement intrinsèque de ces modules et qui peut s'avérer importante sur certains modules de forte puissance (tel qu'un amplificateur haute puissance dit HPA pour "High Power Amplifier" en anglais). Afin de maintenir l'environnement thermique de ces modules dans des plages de températures compatibles de leur fonctionnement, de leurs performances et de la durée de vie de la mission spécifiée, il est nécessaire, comme exposé ci-dessus, de prévoir un dispositif de transfert de chaleur pour collecter, transporter puis évacuer cette chaleur vers l'espace.

A cette fin, une conduite 22 a été prévue dans l'équipement 20, laquelle est conformée pour présenter une surface commune optimale avec le module 21.

Cet équipement, destiné à être agencé sur une structure 24 de support du satellite, comporte deux ouvertures O1 et O2 correspondant respectivement aux extrémités de la conduite 22. Par ailleurs, le module 21 est pourvu d'un connecteur 23. Lors de sa mise en place, l'équipement est disposé en regard d'ouvertures correspondantes aux ouvertures O1 et O2 et en regard d'un connecteur 25. Le connecteur 25 est relié à un bus 33 véhiculant différent signaux. Ce bus et le signaux y afférents feront l'objet d'explications plus détaillées dans la suite. Comme il sera vu, ce bus 33 peut être remplacé par plusieurs bus véhiculant chacun des signaux propres ou être remplacé par une fibre optique.

Un dispositif de raccord 26, illustré uniquement sur l'une des deux ouvertures mais qui doit être présent sur les deux en réalité, permet le raccord de la conduite 22 à deux dérivations respectives 27 et 28 rejoignant la ligne de transport 29 du dispositif de transfert de chaleur. Bien entendu, le dispositif de raccord est pourvu des moyens classiques, tels que des joints d'étanchéité adéquats, permettant un raccord sans défauts.

En outre, le dispositif de raccord comporte un dispositif de verrouillage/déverrouillage qui verrouille ou non les dérivations 27, 28 selon la présence d'un équipement ou non sur son toit. Le dispositif de verrouillage/déverrouillage est représenté schématiquement sur la figure 4 par des clapets 260, 261 qui permettent de dériver le fluide caloporteur à travers soit la conduite 22 (mode verrouillé avec une boucle longue) soit la conduite 32 (mode déverrouillé avec une boucle courte) selon la présence ou non de l'équipement.

Selon une variante représentée sur la figure 4a, la conduite 22 se poursuit sur une longueur prédéterminée au delà des ouvertures O1 et O2 à l'extérieur de l'équipement 20 pour former des segments extérieurs 30, 31. Selon cette variante, la coopération entre l'équipement 20 et la structure 24 ne se traduit non pas par une coïncidence d'ouvertures en regard mais par un encastrement des segments 30, 31 au sein des dérivations respectives 27, 28. Les segments 30, 31 restent solidement logés au sein des dérivations 27, 28 au moyen, par exemple, d'un dispositif de verrouillage/déverrouillage du type de celui de la figure 4 sous la référence 26. Bien entendu, que ce soit dans cette variante ou dans le mode de la figure 4, le dispositif 26 peut être n'importe où, dans la mesure où il remplit sa fonction de fermeture/ouverture de la circulation du fluide dans la conduite 22.

De manière avantageuse, il peut être envisagé de produire des segments 30, 31 qui soient flexibles et qui iraient se connecter au réseau principal de transfert de chaleur ou à tout autre point de connexion plus commode.

On notera que, dans le cas présent, le dispositif de transfert de chaleur est du type à boucle fluide monophasique. En effet, le fluide caloporteur 32 dans la ligne 29 de transport absorbe la puissance dissipée par le module électronique 21 hautement dissipatif, augmentant ainsi sa température, et transporte cette puissance en se refroidissant pour la rejeter vers un ou plusieurs radiateurs.

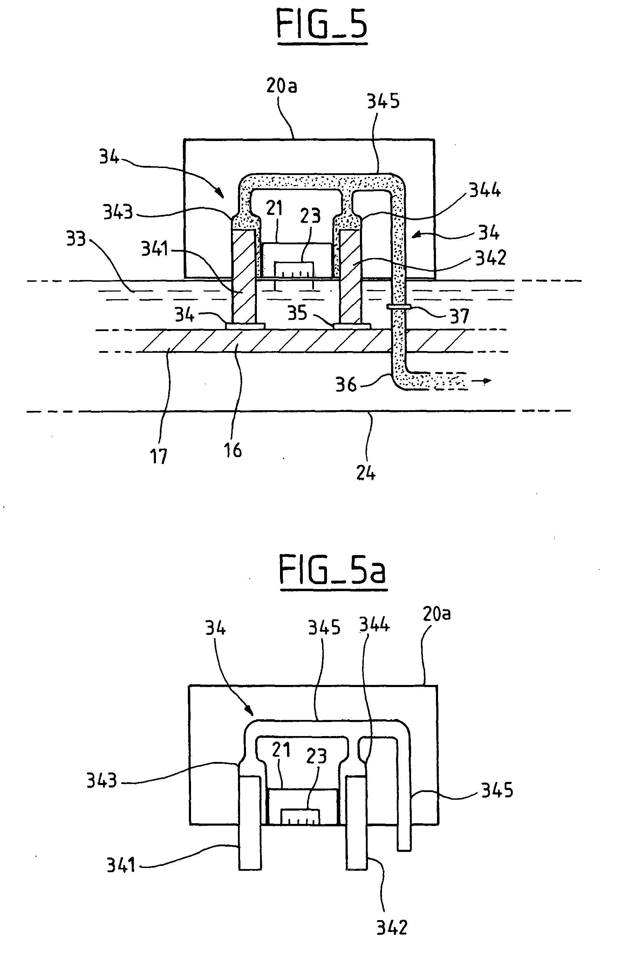

La figure 5 représente un équipement 20a selon un mode de réalisation de l'invention coopérant avec un dispositif de transfert de chaleur à boucle fluide diphasique.

Par ailleurs, sur la figure 5a a été représenté, pour des raisons de clarté, l'équipement 20a découplé de sa structure de support 24.

Le module 21 source potentielle de chaleur se trouve au voisinage direct d'un ensemble évaporateur 34. La zone d'évacuation de la chaleur située au niveau d'un panneau de radiateur déployable, au voisinage de laquelle se trouve le condenseur associé, n'est bien entendu pas figurée ici.

L'équipement 20a est fixé à la structure 24 par des premiers raccords 34 et 35 permettant le raccord de tubes évaporateurs 341, 342 à la conduite 17 d'alimentation de fluide caloporteur 16 provenant du réservoir 13.

Des enveloppes externes des tubes évaporateurs 341, 342, enveloppes respectivement référencées 343 et 344, permettent de récolter la vapeur générée au niveau de la surface des tubes, ceci conformément aux principes de fonctionnement expliqués en introduction de la présente demande.

Ces enveloppes 343 et 344 se rejoignent dans l'équipement 20a au niveau d'une conduite 345, appelée collecteur pour des raisons de concision.

Le collecteur 345 se fixe à une ligne de transport 36 de la structure 24 au moyen d'un raccord 37. La vapeur collectée dans les enveloppes externes 343, 344 en contact direct avec le module 21 source de chaleur s'écoule dans la ligne de vapeur 36 jusqu'au condenseur du dispositif de chaleur.

Le principe énoncé ci-dessus de modularité adapté aux équipements de modules électroniques, peut également s'appliquer aux radiateurs du dispositif de transfert de chaleur. Ainsi, dans un mode de réalisation de l'invention non représenté, la structure du satellite est pourvue des moyens de connexion mécaniques, thermiques et électriques standardisés et adaptés pour la connexion de plusieurs radiateurs. Ce mode de réalisation est particulièrement avantageux pour refroidir un ensemble d'équipements très dissipatifs de chaleur ou pour associer à chaque radiateur un groupe d'équipements correspondant à une température d'échauffement propre et donc nécessitant un refroidissement adapté. Cette dernière application permet avantageusement de regrouper chaque groupe d'équipements géographiquement sur la structure en lui faisant correspondre le radiateur associé.

Le principe de modularité, ainsi énoncé, s'applique aussi pour chaque équipement ; ainsi, selon une variante avantageuse, non représentée, l'équipement 20 dispose de plusieurs conduites 22, chacune reliable par une interface du type O1, O2, 27, 26 à différentes conduites 32 reliées à différents dispositifs de transfert de chaleur. Chaque conduite 32 a, dans cette variante, un mode de fonctionnement différent : température et puissance seraient ainsi propres à chaque dispositif de transfert de chaleur. De la sorte, les modules 21 d'un équipement sont maintenus dans des gammes de température différentes.

Un tel équipement peut alors être connecté simultanément à plusieurs boucles pour avoir des témpératures et des puissances à dissiper différentes par module: par exemple, un MPM ("Microwave Power Module" en anglais), qui est l'association d'un CAMP, d'un EPC et d'un TWT, peut avoir des zones très chaudes (au voisinage du TWT) et d'autres plus froides (au voisinage du CAMP) et encore d'autres tempérées (au voisinage de l'EPC).

Il est à présent décrit plus précisément les interfaces, notamment électriques, entre les modules 21 des équipements et le ou les bus 33 de transport des signaux utiles de la structure.

Ce bus formant l'interface électrique de la structure 24, est banalisé et disponible dans le fond de la structure à l'image d'un "fond de panier". La banalisation consiste d'une part à définir de façon permanente la position et la nature de la connection, le type et les caractéristiques des signaux et d'autre part de mettre à disposition sur les bus la totalité des signaux existants, à charge au module 21 connecté de sélectionner les signaux voulus. Ce bus 33 permet, comme expliqué par la suite, l'alimentation en puissance électrique, en signaux de servitudes pour l'acquisition des mesures et le contrôle des équipements (dit TM/TC pour TéléMesure/TéléCommande, références de temps et de fréquence...), en signaux "utiles" radiofréquences, analogiques ou numériques selon la mission souhaitée...

Des organes centraux assurent le brassage des signaux utiles véhiculés par les bus. Ces organes sont configurés de façon statique à la conception de la mission ou de façon dynamique au cours de la mission par programmation ou télécommande.

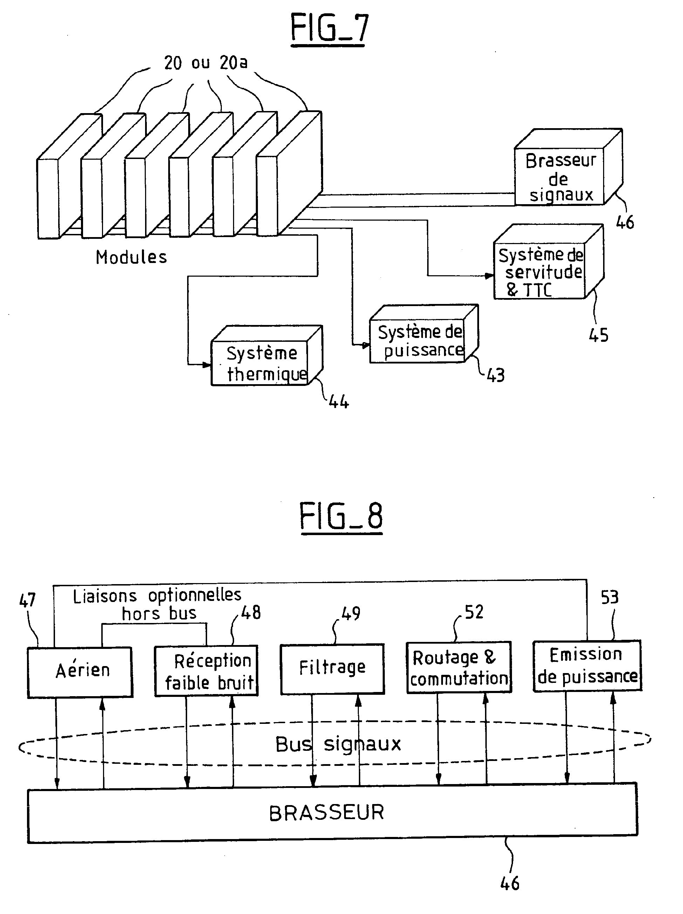

La figure 6 représente l'agencement d'équipements 20 par rapport à différents bus de la structure du satellite selon un mode de réalisation de l'invention. Les équipements électroniques étant conditionnés sous forme blindée ou en cartes, sont insérés dans une structure mécanique 38 porteuse, elle-même solidement fixée sur la structure 24, qui assure le maintien mécanique des équipements. Les modules 21 sont connectés, via leurs connecteurs 23, à des bus disposés sur la structure 24 porteuse. Les bus regroupent les diverses interfaces électriques : le bus 39 d"alimentation de puissance électrique, le bus 40 de signaux de servitude (TM/TC, OL...), le bus 41 de signaux utiles (micro-onde, FI, numérique...), et les lignes de transport de contrôle thermique, déjà expliqués ci-dessus (boucle fluide mono ou biphasique...).

Comme illustré sur la figure 7, le système de communication 42 selon un mode de réalisation de l'invention permet de relier, au moyen des différents bus 39-41 et 17, les modules 21 des équipements 20, 20a aux divers sous-systèmes du satellite : système de puissance électrique 43, système de contrôle thermique 44 (également dénommé dispositif de transfert de chaleur ci-dessus), système de servitude et TTC 45... Le bus des signaux utiles (micro-onde, FI, numérique...) est, quant à lui, relié à un brasseur 46 qui assure la mise en relation fonctionnelle (échange des signaux utiles) entre modules. Bien entendu, de façon non représentée, le brasseur est également relié aux moyens de contrôle de fonctionnement du satellite. On entend par brassage, dans la présente demande, l'opération de routage des signaux entre équipements. De façon plus détaillée, les différents bus possibles sont donc :
- le bus 39 d'alimentation électrique qui fournit les diverses tensions aux modules,
- le bus 40 des servitudes : y sont véhiculés les signaux de TM/TC qui assurent l'acquisition des télémesures et le contrôle des modules, les références temporelles et fréquentielles, ...
- le bus 17 thermique sous forme de surface de contact pour l'échange de calorie avec le module (connecteur thermique "sec"), ou de tuyauterie et la connectique associée pour échanger des fluides thermiques (boucle fluide mono ou biphasique), comme expliqué ci-dessus,
- le bus 41 de signaux: le bus micro-onde faible et moyenne puissance en câbles et connecteurs coaxiaux, le bus micro-onde fort niveau en guide d'onde, le bus optique en fibre, le bus numérique faible, moyen et fort débit...

La banalisation du bus de servitude peut se baser sur l'invention objet de la demande de brevet déposée le 27 novembre 2001 par la Demanderesse sous le numéro de dépôt FR 0115302 et intitulée "Interface dorsale, interface terminale de communication pour véhicule spatial et réseau de communication comprenant de telles interfaces". Une connexion unique par fibre optique permet alors, selon cette invention, l'accès à toutes les servitudes.

Dans le cas d'une charge utile de télécommunication, le bus 41 de signaux véhicule des micro-ondes à faible, moyenne et forte puissance. Le brasseur 46 du bus assure par sa programmation statique ou dynamique la mise en relation des différents modules tel que l'aérien 47, les amplificateurs faible bruit 48, les récepteurs, les convertisseurs de fréquence, les filtres 49, les démultiplexeurs, les amplificateurs de canaux, les amplificateurs 53 à TOP ou SSPA, les dispositifs 52 de routage & commutation, ...). Le brasseur permet ainsi de définir l'architecture de la charge utile et la gestion des redondances.

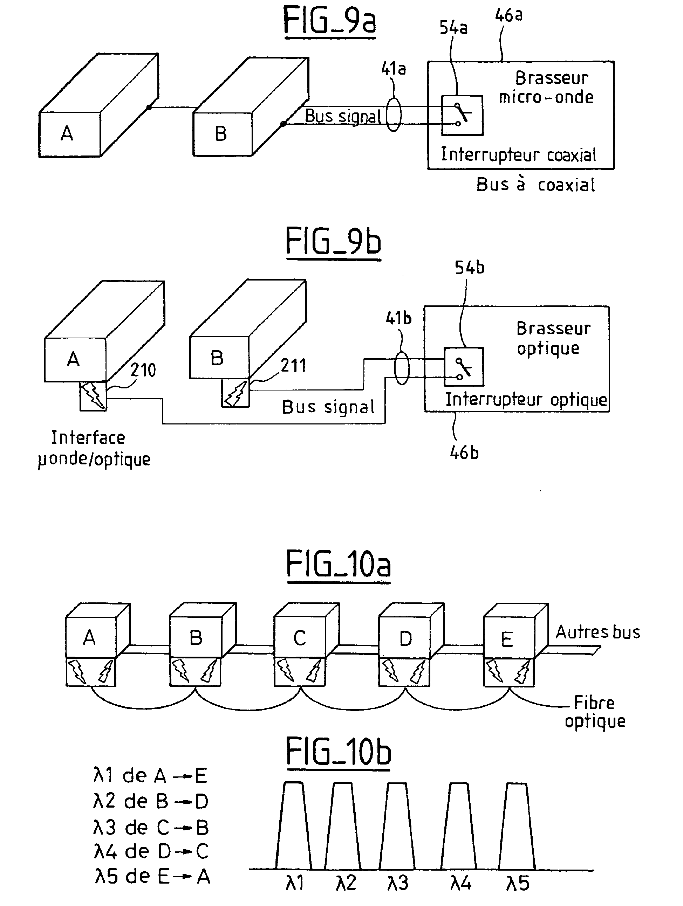

Les figures 9a et 9b illustrent respectivement deux types de technologies utilisables pour le brasseur. Sur la figure 9a est illustré un bus 41a à câble coaxial. Le brasseur 46a de signaux est un brasseur micro-onde avec un interrupteur 54a coaxial. Sur la figure 9b, la banalisation du bus micro-onde à moyen niveau est basée sur l'utilisation des techniques optiques connues de multiplexage en longueur d'onde (WDM). Un bus 41b en fibre optique véhicule entre les équipements A et B les signaux micro-ondes qui modulent des porteuses optiques de différentes longueurs d'onde.

Comme illustré sur les figures 10a et 10b, le choix de la longueur d'onde de l'émetteur (référencé par une flèche sortante des équipements A,B,C,D,E) et celle du récepteur (référencé par une flèche entrante dans les équipements A,B,C,D,E) des équipements A,B,C,D,E permet de multiplexer les signaux sur un média optique unique et d'adresser les différents modules de façon séparée sur les 5 longueurs d'onde λ1, λ2, λ3, λ4, et λ5.

L'invention permet d'atteindre notamment les avantages suivants :
- meilleure utilisation des volumes intérieurs du satellite (utilisation des murs et des cloisons). Le fait de pouvoir placer des équipements, cartes, boites et racks, à l'intérieur du volume du satellite, permet un placement sur trois dimensions (3D) de ces équipements, contrairement à l'ancienne architecture plutôt planair (2D), où les équipements étaient agencés sur des surfaces planes correspondant aux panneaux dissipatifs Nord et Sud. Le placement en 3D permet une optimisation (raccourcissement) des distances entre équipements. Ceci a des conséquences positives sur les performances des charges utiles: réduction des pertes sur les chemins micro-ondes, augmentation des débits de transfert sur les liens numériques, réduction de la masse des chemins thermiques...
- standardisation des interfaces mécaniques, électriques et thermiques des équipements et les avantages qui sont inhérents: capacité accrue pour les réparations d'équipements (échange standard de l'équipement en panne pendant l'AIT), outillage standard de test des équipements (toutes les interfaces sont testés sur le même véhicule de test), meilleure complétude des tests au niveau des équipements (les interfaces thermiques sont mesurés et testés)...
- banalisation des interfaces des signaux utiles et de servitudes (un interface physique et un média unique pour tous les signaux),
- reconfigurabilité de la charge utile à la conception ou en opération. La définition de l'architecture de la charge utile est faite par la programmation statique ou dynamique des brasseurs de bus,
- standardisation de la charge utile et baisse des coûts par effet récurrent,
- souplesse de testabilité: le test des bus sur la plate-forme du satellite est indépendant du test des modules, et l'assemblage final est facilité,
- indépendance de l'anénagement et des témpératures de fonctionnement des équipements : par répartition des équipements par puissances dissipées et par témpératures de fonctionnement,
- optimisation du fonctionnement des modules par le choix de la témpérature de fonctionnement.

Bien entendu , l'invention n'est pas limitée aux modes de réalisation décrits. On pourra remplacer tout moyen par un moyen équivalent sans sortir du cadre de l'invention.

## Revendications

1. Equipement (20,20a) destiné à être soutenu par une structure (24) de satellite (50) ayant un dispositif (44,10) de transfert de chaleur pour transporter la chaleur dissipée vers un radiateur (51), l'équipement comportant au moins un module électronique (21) pour la charge utile ou la plateforme du satellite (50), ledit équipement comprenant des moyens de transfert (22,30,31,34,341-345) de la chaleur dissipée par le module électronique , et des moyens de raccord (26,34,35,37) de ces moyens de transfert audit dispositif (10) de transfert de chaleur de la structure de manière à permettre l'alimentation desdits moyens de transfert en fluide (16) caloporteur et le transfert de la chaleur dissipée par le module électronique vers le radiateur, caractérise en ce le dispositif de transfert de chaleur est du type à boucle fluide,ces moyens de transfert de chaleur sont conformés pour présenter une commune optimale avec ledit module de manière à absorber la puissance dissipée par celui-ci et en ce que l'equipement comporte une pluralité de moyens de transfert et une pluralité de moyens de raccord destinés à être raccordés à une pluralité correspondante de dispositifs de transfert de chaleur spécifiques par leurs capacités de dissipation de puissance et de maintien dans des gammes de température propres.

2. Equipement selon l'une des revendications 1, **caractérisé en ce que**, le dispositif de transfert de chaleur étant du type à boucle fluide monophasique, lesdits moyens de transfert comprennent une conduite (22) conformée pour présenter une surface commune optimale avec le module (21), cette conduite présentant deux extrémités (O1,O2) sur lesquels s'articulent lesdits moyens de raccords pour la connexion audit dispositif de transfert de chaleur de la structure.

3. Equipement selon la revendication 2, **caractérisé en ce que** lesdites extrémités se trouvent au niveau du plan inférieur de contact de l'équipement avec la structure, et **en ce que** le dispositif de transfert de chaleur de la structure comporte des dérivations (27,28) dont les extrémités présentent des ouvertures au niveau du plan supérieur de contact de la structure avec l'équipement de manière à faire coïncider les ouvertures correspondantes lors de la fixation de l'équipement sur la structure.

4. Equipement selon la revendication 2, **caractérisé en ce que** ladite conduite (22) se poursuit sur une longueur prédéterminée au delà desdites ouvertures (O1,O2) à l'extérieur de l'équipement formant ainsi des segments extérieurs (30,31).

5. Equipement selon la revendication 4, **caractérisé en ce que** la coopération entre l'équipement (20) et la structure (24) se réalise par encastrement des segments (30,31) au sein des dérivations respectives (27, 28).

6. Equipement selon l'une des revendications 2 à 5, **caractérisé en ce que** le dispositif de raccord comporte un dispositif (260,261) de verrouillage/déverrouillage qui bloque/autorise la circulation du fluide dans la conduite (22).

7. Equipement selon la revendication 1, **caractérisé en ce que**, le dispositif de transfert de chaleur étant du type à boucle fluide diphasique (10), l'équipement comporte :
- un ensemble évaporateur (34) comprenant au moins un tube (341,342) pour l'alimentation en fluide caloporteur à l'état liquide de l'ensemble, au moins une enveloppe externe (343,344) du tube évaporateur agencée présentant une surface optimale avec le module de façon à récolter la vapeur générée au niveau de la surface extérieure du tube lorsque le module dissipe de la chaleur, et un collecteur (345) de vapeur,
- des moyens de raccord (34,35,37) du tube (341,342) et du collecteur (345) aptes à raccorder ces derniers respectivement à une conduite (17) d'alimentation en fluide caloporteur (16) provenant d'un réservoir (13) et à une ligne de transport de vapeur (36) pour véhiculer cette dernière vers le condenseur (12) du dispositif de chaleur.

8. Equipement selon l'une des revendications précédentes, **caractérisé en ce que** le module (21) comporte des moyens (23) de connexion à des moyens de transport de signaux situés dans la structure (24) et destinés à véhiculer :
- une alimentation électrique fournissant les diverses tensions à l'équipement,
- et/ou les signaux de servitudes tels que ceux pour l'acquisition des télémesures des équipements et le contrôle de ces derniers, les références temporelles et fréquentielles,
- et/ou les signaux utiles tels que les signaux micro-ondes, optiques et numériques.

9. Equipement selon la revendication précédente, **caractérisé en ce que**, lesdits moyens de transport de signaux étant à technologie optique, les moyens de connexion comporte des moyens (210,211) de conversion micro-onde/optique.

10. Structure de satellite, **caractérisée en ce qu'**elle supporte un équipement selon l'une des revendications 1 à 10.

11. Structure de satellite selon la revendication précédente, **caractérisée en ce qu'**elle est pourvue des moyens de connexion mécaniques, thermiques et électriques adaptés pour la connexion de plusieurs radiateurs.

12. Agencement d'équipements pour une structure de satellite selon la revendication 11, **caractérisé en ce que** les équipements sont ceux selon l'une des revendications 1 à 9 et sont regroupés par groupe d'équipements correspondant à une température d'échauffement propre et donc nécessitant un refroidissement adapté par un radiateur propre.

13. Système (42) de communication pour un satellite, **caractérisé en ce qu'**il comprend au moins un équipement selon l'une des revendications 8 ou 9 , et une structure (24) de support de cet équipement .

14. Système selon la revendication 13, **caractérisé en ce que** ledit système comporte :
- un brasseur (46) de signaux utiles,
- un sous-système (45) de servitudes,
- un sous-système (43) d'alimentation de puissance,
ces derniers étant respectivement reliés auxdits moyens de transport de signaux.

15. Système selon la revendication 14, **caractérisé en ce que** le brasseur comporte des moyens de programmation statiques ou dynamiques du module (21).

16. Système selon la revendication 13 ou 14, **caractérisé en ce que**, pour véhiculer les signaux optiques et les signaux micro-ondes de fort niveau convertis ou destinés à être convertis dans le domaine optique, lesdits moyens de connexion de l'équipement comporte des moyens (210,211) de conversion micro-onde/optique, lesdits moyens de transport comportent au moins une fibre optique (41b) et le brasseur est à technologie optique.

## Claims

1. Equipment (20, 20a) including at least one electronic module (21) for the payload or the platform of a satellite (50) adapted to be supported by a satellite structure (24), the satellite structure including a heat transfer system (44, 10) for transporting dissipated heat to a radiator (51),
said equipment including transfer means (22, 30, 31, 34, 341-345) for transferring heat dissipated by the electronic module and connector means (26, 34, 35, 37) for connecting said transfer means to said heat transfer system (10) of the structure in such a manner as to enable the supply of heat exchange fluid (16) to said transfer means and the transfer of heat dissipated by the electronic module to the radiator, **characterised in that** the heat transfer system is of the fluid loop type, the heat transfer means are conformed to have an optimum common surface with said module in such a way as to absorb the power dissipated by the latter, and **in that** the equipment includes a plurality of transfer means and a plurality of connector means adapted to be connected to a corresponding plurality of heat transfer systems with their own specific power dissipation capacity and temperature range regulation capacity.

2. Equipment according to claim 1, **characterised in that** the heat transfer system is of the single-phase fluid loop type and said transfer means comprise a pipe (22) conformed to have an optimum common surface with the module (21) and having two ends (O1, 02) to which are articulated said connector means for the connection to said heat transfer system of the structure.

3. Equipment according to claim 2, **characterised in that** said ends are at the level of a bottom plane of contact of the equipment with the structure and **in that** the heat transfer system of the structure includes branch connections (27, 28) whose ends have openings at the level of a top plane of contact of the structure with the equipment so as to cause the corresponding openings to coincide when fixing the equipment to the structure.

4. Equipment according to claim 2, **characterised in that** said pipe (22) continues a predetermined distance beyond said openings (O1, 02) outside the equipment thereby forming external segments (30, 31).

5. Equipment according to claim 4, **characterised in that** the cooperation between the equipment (20) and the structure (24) is effected by insertion of the segments (30, 31) inside respective branch connections (27, 28).

6. Equipment according to any of claims 2 to 5, **characterised in that** the connector device includes a locking/unlocking device (260, 261) that selectively blocks and authorises circulation of fluid in the pipe (22).

7. Equipment according to claim 1, **characterised in that** the heat transfer system is of the two-phase fluid loop type (10) and the equipment includes:
- an evaporator assembly (34) comprising at least one tube (341, 342) for supplying the assembly with heat-exchange fluid in the liquid state, at least one external enclosure (343, 344) of the evaporator tube adapted to have an optimum surface with the module to collect vapour generated on the exterior surface of the tube when the module is dissipating heat, and a vapour manifold (345), and
- connector means (34, 35, 37) for the tube (341, 342) and the manifold (345) adapted to connect them respectively to a supply pipe (17) of heat-exchange fluid (16) from a tank (13) and to a vapour transport line (36) for conveying vapour to the condenser (12) of the heat system.

8. Equipment according to any preceding claim, **characterised in that** the module (21) includes connecting means (23) for connecting it to signal transport means situated in the structure (24) and adapted to convey:
- an electrical power supply providing various voltages for the equipment,
- and/or service module signals such as those for acquiring telemetry from the equipments, for controlling the equipments, time references, and frequency references,
- and/or payload signals such as microwave, optical and digital signals.

9. Equipment according to the preceding claim, **characterised in that** said signal transport means employ optical technology and the connection means include microwave/optical converter means (210, 211).

10. A satellite structure, **characterised in that** it supports equipment according to any one of claims 1 to 10.

11. A satellite structure according to the preceding claim, **characterised in that** it is provided with mechanical, thermal and electrical connection means adapted to connect a plurality of radiators.

12. An arrangement of equipments for a satellite structure according to claim 11, **characterised in that** each radiator is associated with a group of equipments corresponding to a specific temperature and therefore necessitating appropriate cooling.

13. Communication system (42) for a satellite, **characterised in that** it includes at least one equipment according to either claim 8 or claim 9 and a support structure (24) for said equipment.

14. System according to claim 13, **characterised in that** it includes:
- a cross-connect unit (46) for payload signals,
- a service module subsystem (45),
- a power supply subsystem (43),
the latter being respectively connected to said signal transport means.

15. System according to claim 14, **characterised in that** the cross-connect unit includes means for statically or dynamically programming the module (21 ).

16. System according to claim 13 or claim 14, **characterised in that**, to convey optical signals and high-level microwave signals that have been converted or are intended to be converted into the optical domain, said connection means of the equipment include microwave/optical converter means (210, 211), said transport means include at least one optical fibre (41 b), and the cross-connect unit uses optical technology.

## Patentansprüche

1. Ausrüstung (20, 20a), dazu bestimmt, von einer Struktur (24) eines Satelliten (50) gehalten zu werden, aufweisend eine Vorrichtung (44, 10) zur Wärmeübertragung, um die abgegebene Wärme zu einem Kühler (51) zu transportieren, wobei die Ausrüstung mindestens ein Elektronikmodul (21) für die Nutzlast oder die Plattform des Satelliten (50) umfasst, wobei die Ausrüstung Übertragungsvorrichtungen (22, 30, 31, 34, 341 - 345) für die von dem Elektronikmodul abgegebene Wärme und Anschlussmittel (26, 34, 35, 37) für diese Übertragungsmittel zu der Wärmeübertragungsvorrichtung (10) der Struktur umfasst, derart, dass die Versorgung der Übertragungsmittel mit Kühlmittel (16) und die Übertragung der vom Elektronikmodul abgegebenen Wärme zum Kühler ermöglicht wird, **dadurch gekennzeichnet, dass** die Wärmeübertragungsvorrichtung dem Typ mit Kühlmittelkreislauf entspricht, dass diese Wärmeübertragungsmittel so geformt sind, dass sie eine optimale gemeinsame Fläche mit dem Modul derart aufweisen, dass die von diesem abgegebene Leistung aufgenommen wird, und **dadurch**, dass die Ausrüstung eine Vielzahl von Übertragungsmitteln und eine Vielzahl von Anschlussmitteln umfasst, dazu bestimmt, an eine entsprechende Vielzahl von Wärmeübertragungsvorrichtungen angeschlossen zu werden, welche aufgrund ihrer Fähigkeiten zur Leistungsabgabe und zum Einhalten von eigenen Temperaturbereichen jeweils spezifisch sind.

2. Ausrüstung nach Anspruch 1, **dadurch gekennzeichnet, dass** die Wärmeübertragungsvorrichtung dem Typ mit einphasigem Kühlmittelkreislauf entspricht, wobei die Übertragungsmittel eine Rohrleitung (22) umfassen, die so geformt ist, dass sie eine optimale gemeinsame Fläche mit dem Modul (21) bieten, wobei diese Rohrleitung zwei Enden (O1, 02) aufweist, an denen die Anschlussmittel für die Verbindung mit der Wärmeübertragungsvorrichtung der Struktur gelenkig verbunden ist.

3. Ausrüstung nach Anspruch 2, **dadurch gekennzeichnet, dass** die Enden sich an der unteren Kontaktfläche der Ausrüstung mit der Struktur befinden, und **dadurch**, dass die Wärmeübertragungsvorrichtung der Struktur Abzweigungen (27, 28) umfasst, deren Enden Öffnungen an der oberen Kontaktfläche der Struktur mit der Ausrüstung derart aufweisen, dass die entsprechenden Öffnungen bei der Befestigung der Ausrüstung an der Struktur übereinstimmen.

4. Ausrüstung nach Anspruch 2, **dadurch gekennzeichnet, dass** sich die Rohrleitung (22) über eine zuvor festgelegte Länge über die Öffnungen (01, 02) der Ausrüstung nach außen fortsetzt und so äußere Segmente bildet.

5. Ausrüstung nach Anspruch 4, **dadurch gekennzeichnet, dass** die Kooperation zwischen der Ausrüstung (20) und der Struktur (24) durch Einbettung der Segmente (30, 31) innerhalb der jeweiligen Abzweigungen (27, 28) erfolgt.

6. Ausrüstung nach einem der Ansprüche 2 bis 5, **dadurch gekennzeichnet, dass** die Anschlussvorrichtung eine Verriegelungs-/Entriegelungsvorrichtung (260, 261) umfasst, welche die Zirkulation der Kühlflüssigkeit in der Rohrleitung (22) absperrt bzw. zulässt.

7. Ausrüstung nach Anspruch 1, **dadurch gekennzeichnet, dass** die Wärmeübertragungsvorrichtung dem Typ mit zweiphasigem Kühlmittelkreislauf (10) entspricht, wobei die Ausrüstung umfasst:
- eine Verdampferbaugruppe (34), umfassend mindestens ein Rohr (341, 342) für die Versorgung der Baugruppe mit Kühlmittel im flüssigen Zustand, mindestens eine Außenhülle (343, 344) des angeordneten Verdampferrohrs, das eine optimale Fläche mit dem Modul derart aufweist, dass der an der Außenfläche des Rohrs erzeugte Dampf gesammelt wird, wenn das Modul Wärme abgibt, sowie einen Dampfsammler (345);
- Anschlussvorrichtungen (34, 35, 37) des Rohrs (341, 342) und des Sammlers (345), die geeignet sind, letztere jeweils an eine Rohrleitung (17) zur Versorgung mit Kühlmittel (16) aus einem Behälter (13) bzw. an eine Dampftransportleitung (36) anzuschließen, um diesen Dampf zum Kondensator (12) der Wärmevorrichtung zu transportieren.

8. Ausrüstung nach einem der vorhergehenden Ansprüche, **dadurch gekennzeichnet, dass** das Modul (21) Verbindungsmittel (23) an Signaltransportmittel umfasst, die in der Struktur (24) angeordnet sind und dazu bestimmt sind zu transportieren:
- eine Stromversorgung, die an die Ausrüstung die verschiedenen Spannungen liefert;
- und/oder Signale von Hilfseinrichtungen wie jene zur Erfassung der Fernmessungen der Ausrüstungen und zur Steuerung von letzteren, der Zeit- und Frequenzbezugswerte;
- und/oder Nutzsignale wie die Mikrowellen-, optischen und digitalen Signale.

9. Ausrüstung nach dem vorhergehenden Anspruch, **dadurch gekennzeichnet, dass** die Signaltransportmittel mit optischer Technologie arbeiten, wobei die Verbindungsmittel Mittel (210/211) zur Umwandlung Mikrowellen/optisch umfassen.

10. Satellitenstruktur, **dadurch gekennzeichnet, dass** sie eine Ausrüstung nach einem der Ansprüche 1 bis 10 trägt.

11. Satellitenstruktur nach dem vorhergehenden Anspruch, **dadurch gekennzeichnet, dass** sie mit mechanischen, thermischen und elektrischen Verbindungsmitteln ausgestattet ist, die für den Anschluss mehrerer Kühler geeignet sind.

12. Anordnung von Ausrüstungen für eine Satellitenstruktur gemäß Anspruch 11, **dadurch gekennzeichnet, dass** die Ausrüstungen jene nach einem der Ansprüche 1 bis 9 sind und dass sie nach Ausrüstungsgruppen zusammengefasst sind, die einer eigenen Erhitzungstemperatur entsprechen und somit eine geeignete Kühlung erfordern.

13. Kommunikationssystem (42) für einen Satelliten, **dadurch gekennzeichnet, dass** es mindestens eine Ausrüstung nach einem der Ansprüche 8 oder 9 und eine Trägerstruktur (24) für diese Ausrüstung umfasst.

14. System nach Anspruch 13, **dadurch gekennzeichnet, dass** das System umfasst:
- einen Nutzsignal-Cross-Connect (46);
- ein Subsystem (45) für die Hilfseinrichtungen;
- ein Subsystem (43) für die Stromversorgungen;
wobei letztere jeweils mit den Signaltransportmitteln verbunden sind.

15. System nach Anspruch 14, **dadurch gekennzeichnet, dass** der Cross-Connect statische oder dynamische Mittel zur Programmierung des Moduls (21) umfasst.

16. System nach Anspruch 13 oder 14, **dadurch gekennzeichnet, dass** die Verbindungsmittel der Ausrüstung für den Transport optischer Signale oder von Mikrowellensignalen mit hohem Pegel, die in den optischen Bereich umgewandelt sind oder umgewandelt werden sollen, Mittel (210, 211) zur Umwandlung Mikrowellen/optisch, wobei die Transportmittel mindestens eine Lichtleitfaser (41 b) umfassen und der Cross-Connect mit optischer Technologie arbeitet.
